Europäisches Patentamt

(19) European Patent Office

Office européen des brevets

(11) Publication number: **0 155 843**

A2

(12)

# EUROPEAN PATENT APPLICATION

(21) Application number: **85301889.3**

(22) Date of filing: **19.03.85**

(51) Int. Cl.⁴: **B 32 B 3/06**
 **B 29 C 47/06, B 29 C 47/20**

(30) Priority: **19.03.84 US 591305**

(43) Date of publication of application:
 **25.09.85 Bulletin 85/39**

(84) Designated Contracting States:
 **AT BE CH DE FR GB IT LI NL SE**

(71) Applicant: **RAYCHEM CORPORATION**
 **300 Constitution Drive**
 **Menlo Park California 94025(US)**

(72) Inventor: **Jaroch, Steven Lyle**
 **41770 Higgins Way**
 **Fremont California 94539(US)**

(72) Inventor: **Hansen, Erling**
 **885 Berry Avenue**
 **Los Altos California 94022(US)**

(74) Representative: **Dlugosz, Anthony Charles et al,**
 **Raychem Limited Intellectual Property Law Department**
 **Faraday Road**
 **Dorcan Swindon Wiltshire(GB)**

(54) Co-extruded multilayer product having improved bond strength.

(57) A co-extruded multilayer product (10) has at least two adjacent layers (12, 14) of material and a bond surface (16) formed between the adjacent layers of material. This bond surface appears as an extended bond line when the product is viewed in cross section. There is also disclosed an extrusion adapter and process for producing the co-extruded multilayer product.

*Fig.3.*

EP 0 155 843 A2

This invention relates to the field of co-extrusion and, particularly, co-extruded tubular products.

The co-extrusion process with which this invention is concerned relates to a process wherein two or more layers of material are extruded simultaneously to form a multilayered tubular product. Illustrative of the co-extrusion process are U.S. Patent No. 3,694,292 to Schippers et al. and U.S. Patent No. 4,249,875 to Hart et al.

When the multiple layers of extruded material are chemically compatible with one another, there will be a satisfactory bond produced between the layers. On the other hand, if there is chemical incompatibility between the layers, there will be an unsatisfactory bond produced. In this latter case, the extruded product will be subject to delamination.

One solution to the problem of delamination is to change the combination of extruded materials. Obviously, this solution is unacceptable for a number of reasons. For example, more expensive materials or materials with inferior properties may have to be used. The worst case is where there is no other combination of materials available to fit the requirements of the job. Another solution is the addition of a bonding agent between the extruded layers. This solution, of course, leads to other problems such as machine design and cost.

Other proposed solutions are described in the above Schippers et al. patent. These other solutions, one by one, have been case aside by those skilled in the art as impractical.

Accordingly, it would be desirable to have a solution for the delamination of co-extruded products. This solution should be simple to use, effective and economically feasible.

It would also be desirable to have a co-extrusion apparatus that effects this solution. An integral part of the co-extrusion apparatus is the extrusion adapter or mandrel. A typical configuration is shown in the above Hart et al. patent. In this patent, the surfaces of the mandrel, the extrusion surfaces, are smooth to reduce frictional drag of the melt.

In U.S. Patent No. 2,687,997 to Marchand and U.S. Patent No. 3,284,259 to Galloway et al., the mandrels have grooves on their periphery. However, these mandrels are not used in a co-extrusion apparatus. Thus, it is believed that these mandrels will not aid in the bonding of the multiple layers of a co-extruded product.

Accordingly, it is an object of this invention to have a co-extruded product with improved bonding of the multiple layers.

It is also an object of this invention to have a co-extrusion apparatus and process that produces a co-extruded product *having* improved bonding of the multiple layers.

It is another object of this invention to have a co-extruded product with improved bonding of the multiple layers that is simple to produce.

It is a still further object of this invention to have an improved co-extruded product, co-extrusion apparatus and co-extrusion process that is practically and economically feasible.

The present invention provides a co-extruded multilayer product comprising at least two adjacent layers of material having a bond surface formed therebetween, said bond surface appearing as a bond line when the product is viewed in cross-section, wherein said bond line is extended.

It has been found that by extending the bond line, good bonding can be obtained between two adjacent layers of material which otherwise are chemically incompatible. This good bonding is achieved without adhesives or liquid bonding agents or any of the other treatments heretofore practiced in the prior art.

A product produced according to the invention is simple to produce, has an effective bond layer, and is economically feasible in practice.

Finally, there is disclosed according to the invention, an extrusion adapter for use with a co-extrusion apparatus. The extrusion adapter compises a generally cylindrical inner extrusion surface and a frustoconical outer extrusion surface. These surfaces converge toward a forward end of the adapter wherein at least one of the inner and outer surfaces has lengthwise gravures.

It has been found that the use of lengthwise gravures on the inner or outer extrusion surfaces is important to the formation of the good bond layer as is explained hereafter.

A product and extrusion adapter according to the invention will now be described, by way of example, with reference to the accompanying drawings, in which:

Figure 1 is a cross-section of a co-extruded tubular product produced according to the prior art;

Figure 2 is a cross-section of a co-extruded tubular product produced according to the invention;

Figure 3 is a partial view of a co-extruded product produced according to the invention wherein a portion of the top layer is partially removed;

Figure 4 is a cross-sectional view of the co-extrusion adapter in its working environment;

Figure 5 is an enlarged cross-sectional view of the extrusion adapter;

Figure 6 is an end view of the extrusion adapter of Figure 5; and

Figure 7 is an enlarged view of the gravures which are illustrated in Figure 6.

According to the invention, there is disclosed a co-extruded multilayer product comprising at least two adjacent layers of material. There is a bond surface formed between these two adjacent layers of material. The bond surface appears as a bond line when the product is viewed in cross-section. When the product is produced according to the invention, the bond line will be extended.

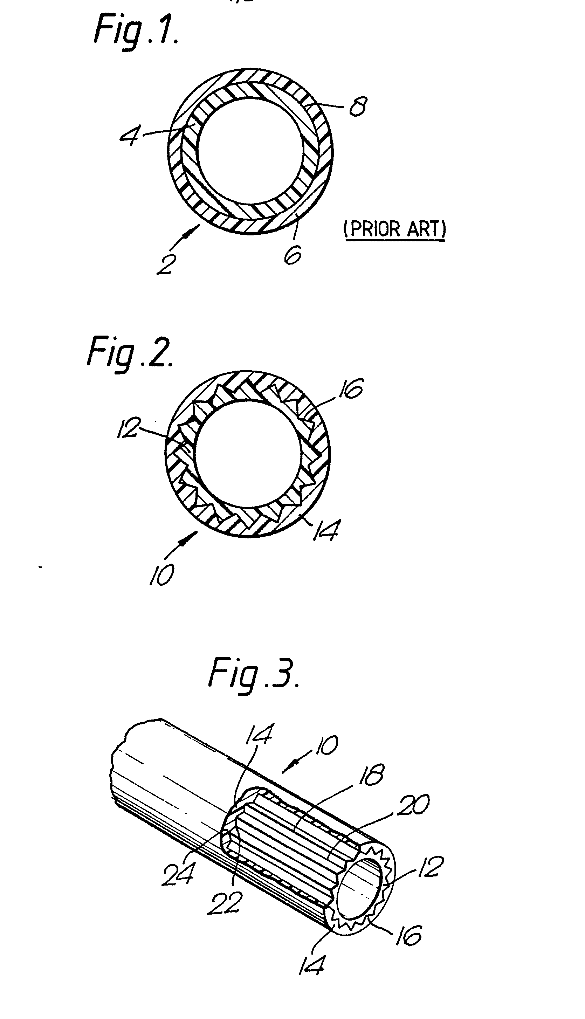

The meaning of the extension of the bond line will become clear after reference to Figures 1 and 2. Figure 1 shows a cross-sectional view of a co-extruded tubular product produced according to the prior art. The tubular product 2 has an inner layer 4 and an outer layer 6. The bond line 8 is circular in appearance as would be expected from the prior art processes.

Shown in Figure 2 is a cross-sectional view of a co-extruded tubular product produced according to the invention. The tubular product 10 has an inner layer 12 adjacent to an outer layer 14. The bond surface between the inner and outer adjacent layers appears, when viewed from the end, as bond line 16. It can be seen that the bond line 16 is extended, or longer in length, when compared to the circular bond line 8 of Figure 1. In practice, the extended bond line 16 as shown in Figure 2 actually translates to a bonding area about 2 times greater than the prior art bonding area as illustrated in Figure 1. Of course, it is possible to increase the bonding area even more, as will be explained hereafter.

Whenever in this specification the bond line is said to be "extended", it should be understood that this means that the bond line is longer in length when compared to the circular bond line of the prior art.

The co-extruded tubular product of the invention may be produced inner layer 12 of material and then extruding outer layer 14 of material over the inner layer. A bond surface is formed between the inner and outer layers wherein the bond surface appears as bond line 16 when viewed from the end. The final step in the process is extending the bond line simultaneously with the extruding of the inner and outer layers.

The step of extending the bond line comprises forming an axially oriented array of portions on one of the inner and outer layers and then forming a complementary axially oriented array of portions on the other of the inner and outer layers so that the bond line has at least one segment which is noncircular. As will be explained in more detail hereafter, the extrusion adapter of this invention is useful in forming the axially oriented array of portions on the inner and outer layers.

It is preferred that the bond surface comprise complementary portions from each of the adjacent layers so that the bond line has at least one segment which is not circular. Again, a circular bond line would be similar to bond line 8 as shown in Figure 1. Such a circular bond line represents the minimum amount of bonding possible. When at least one segment of the bond line is not circular, this segment represents a bonding line of increased length (i.e. an extended bond line) and therefore a bonding surface of increased area. It is expected that many configurations of the bond line other than that shown by way of example in Figure 2, can be contemplated within the scope of the invention. However, any of the other configurations should have complementary portions so that the end result is an extension of the bond line. For instance, the bond line may have a square-tooth configuration or a sinusoidal configuration or even an oval configuration (configuration not shown). Also, the complementary portions may be periodic (like in Figure 2) or completely random (not shown).

In the most preferred embodiment of the co-extruded product, as shown in Figures 2 and 3, the bond surface complementary portions comprise a periodic array of axially oriented ridges and grooves on each of the adjacent layers. Thus, there is a periodic array of axially oriented ridges 18 and grooves 20 on one of the adjacent layers, for example layer 12, and these ridges and grooves are complementary to another periodic array of axially oriented ridges 22 and grooves 24 on the other of the adjacent layers, for example layer 14, so that the bond line 16 has a generally saw-toothed configuration. In other words, ridge 18 of layer 12 is complementary to groove 24 of layer 14 and groove 20 of layer 12 is complementary to ridge 22 of layer 14.

As previously mentioned, the product of the invention achieves a bonding area about two times greater than the prior art product. The bonding area of the product of the invention may be varied by making the grooves 20 and 22 of layers 12 and 14, respectively, deeper or shallower. Generally an increase in bonding area results from a deeper groove while a decrease in bonding area results from a shallower groove.

It is believed that when the bond layers are configured as shown in Figure 3, then effective bonding will be achieved between adjacent layers of material independently of their chemical compatibility or incompatibility. There will also be no need for adhesives, liquid bonding agents or any of the other treatments heretofore specified in the prior art as necessary to achieve a strong bond layer.

Thus it is expected that the objects of the invention will be achieved if one of the adjacent layers of material is a polymeric material or a thermoplastic polymeric material or a thermosetting polymeric material or even a metallic material. It is also expected that good bonding will be achieved for any combination of these materials.

One of the adjacent layers of material is an inner layer 12 and the other of the adjacent layers is an outer layer 14. In a preferred embodiment the inner and outer layers should comprise materials having differing viscosities. It is most preferred that the outer layer material have a viscosity lower than the inner layer material. The reason for the difference in viscosities is believed to be that as the inner layer is extruded with the lengthwise ridges and grooves, the outer layer which has a lower viscosity can flow over and then conform to these ridges and grooves. Upon hardening of the material, there will be a resulting bond line having a saw-tooth configuration.

It is also preferred that the inner and outer layers comprise materials having differing melting points. In the most preferred embodiment, the outer layer of material 14 should have a melting point higher than the inner layer material 12.

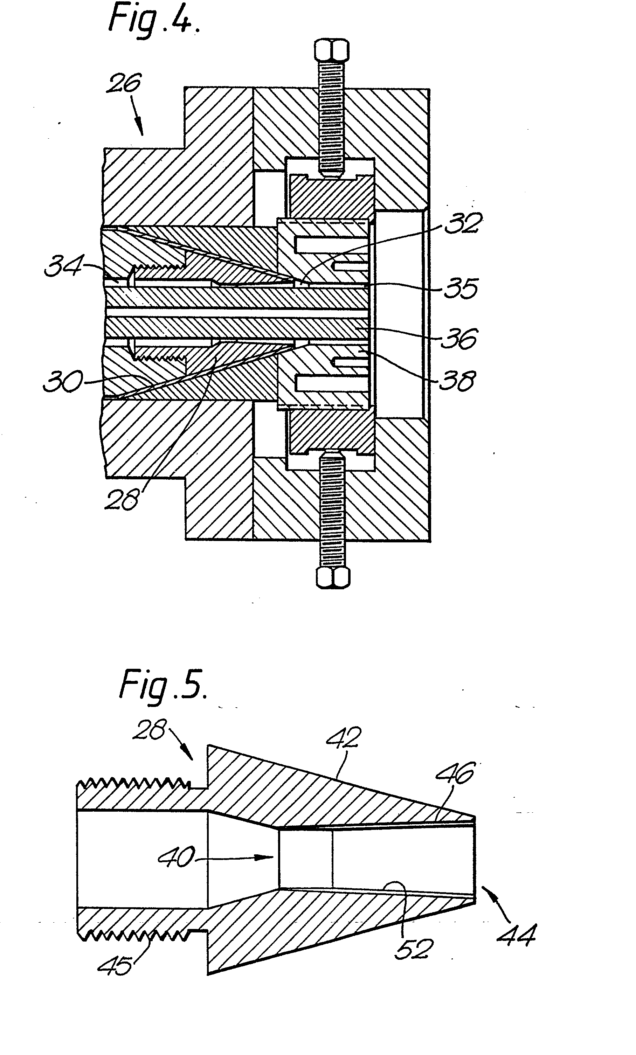

Figures 4 to 7 shown another aspect of the invention. Figure 4 shows the front part 26 of the co-extrusion apparatus. Shown therein is the extrusion adapter 28 in its working environment. In the working of the apparatus, as will already be apparent to those skilled in the art, the outer layer of material will flow through passageway 30 and the inner layer of material will flow through passageway 34. Both layers of material will meet at 32 and will then be extruded through passageway 35 between the tip 36 and the diehead 38. Figure 5 shows the extrusion adapter 28 in an enlarged view.

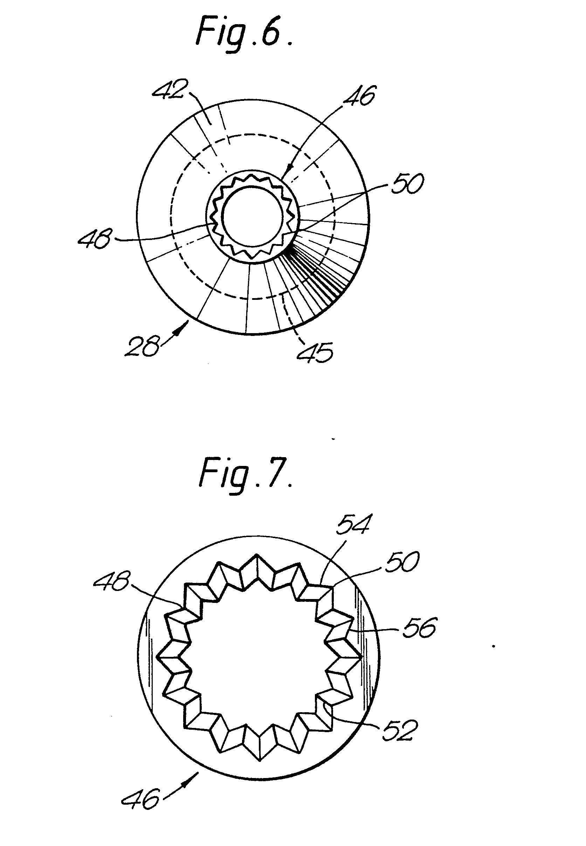

According to the invention, the extrusion adapter 28 is for use with a co-extrusion apparatus. The extrusion adapter 28 comprises a generally cyclindrical inner extrusion surface 40 and a frustoconical outer extrusion surface 42. Frustoconical surface should be understood to mean that the surface is generally in the shape of a cone but the top half of the cone has been cut parallel to the base of the cone. The cylindrical inner extrusion surface and the frustoconical outer extrusion surface converge toward a forward end 44 of the adapter. The extrusion adapter may also comprise threaded connection means 45. At least one of the inner and outer surfaces has lengthwise gravures. These gravures can be seen on Figure 6 and most clearly on Figure 7. As illustrated in the figures, the gravures 46 are actually a series of ridges 48 and grooves 50. By way of example, the gravures 46 may have a sawtooth configuration. Other configurations, such as a square-tooth configuration are within the scope of the invention as discussed earlier.

It can be appreciated that as the materials flow through passageways 30 and 34, the configuration of the gravures, whatever it may be, will be transferred to the materials. When the gravures are only on one of the extrusion surfaces, for example inner surface 52, the configuration of the gravures will be transferred only to the inner layer. However, by proper selection of the temperature and viscosity of the outer layer, the outer layer will flow over the inner layer at 32 and complementary portions will form so that the outer layer will conform nicely to the inner layer.

It can be seen in Figure 7 that each groove 50 comprises two intersecting surfaces 54 and 56, which

0155843

MP0915

are not necessarily equal in length. By decreasing the included angle between surfaces 54 and 56, the groove 50 can be made deeper which increases the bond line in a co-extruded product. By increasing the angle, the groove can be made shallower which decreases the bond line. In any case, the bond line is always greater in length than the prior art bond line.

While Figures 5 to 7 show the gravures along the inner surface 52 of the extrusion adapter, this is by way of illustration only. It is contemplated within the scope of the invention that both of the inner and outer surfaces may have these gravures. Similarly, the gravures may be located only on the outer surface of the adapter. It is most preferred however, that only the inner surface 52 of the extrusion adapter has these gravures 46.

It is most preferred that the gravures 46 whether on the inside or the outside of the extrusion adapter should terminate at the forward end 44 of the extrusion adapter.

0155843

CLAIMS:

1.      A co-extruded multilayer product comprising at
least two adjacent layers of material having a bond
surface formed therebetween, said bond surface
appearing as a bond line when the product is viewed in
cross-section, wherein said bond line is extended.

2.      A product as claimed in claim 1 wherein said
bond surface comprises complementary portions from each
of said adjacent layers so that said bond line has at
least one segment which is noncircular.

3.      A product as claimed in claim 2 wherein said
bond surface complementary portions comprise a periodic
array of axially oriented ridges and grooves on one of
the adjacent layers complementary to a periodic array
of axially oriented ridges and grooves on the other of
the adjacent layers so that said bond line has a
generally saw-tooth configuration.

4.      A product as claimed in any one of claims 1 to 3,
wherein one layer of said adjacent layers of material
is a polymeric material preferably a thermoplastic or
thermosetting polymeric material.

5.      A product as claimed in claim 1 wherein at least
one layer of said adjacent layers of material is a
metallic material.

6.      A product as claimed in any one of claims 1 to
5, wherein one of said adjacent layers is an inner
layer and the other of said adjacent layers is an outer
layer, said inner and outer layers comprising materials having differing viscosities, and preferably said outer layer material has a viscosity lower than said inner layer material.

7.      A product as claimed in any one of claims 1 to 6, wherein one of said adjacent layers is an inner layer and the other of said adjacent layers is an outer layer, said inner and outer layers comprising materials having differing melting points and preferably said outer layer material has a melting point higher than said inner layer material.

8.      An extrusion adapter for use with co-extrusion apparatus comprising a generally cylindrical inner extrusion surface and a frustoconical outer extrusion surface, said surfaces converging toward a forward end of the adapter, wherein at least one of said inner and outer surfaces has lengthwise gravures.

9.      An extrusion adapter as claimed in claim 8 wherein both of said inner and outer surfaces have said gravures.

10.     An extrusion adapter as claimed in claim 8 wherein only said inner surface has said gravures.

11.     An extrusion adapter as claimed in any one of claims 8 to 10, wherein said gravures terminate at said forward end of the adapter.

12.     A co-extrusion process comprising extruding an inner layer of material; extruding an outer layer of material over said inner layer; forming a bond surface between the inner and outer layers wherein the bond surface appears as a bond line when viewed in cross-section; extending the bond line simultaneously with the extruding of the inner and outer layers.

13. A co-extrusion process as claimed in claim 12 wherein the step of extending the bond line comprises forming an axially oriented array of portions on one of the inner and outer layers; forming a complementary axially oriented array of portions on the other of the inner and outer layers so that the bond line has at least one segment which is noncircular.

14. A co-extrusion process as claimed in claim 12 or claim 13, wherein at least one layer of said inner and outer layers of material is a polymeric material preferably a thermoplastic or thermosetting polymeric material.

15. A co-extrusion process as claimed in claim 12 or claim 13, wherein at least one layer of said inner and outer layers of material is a metallic material.

16. A co-extrusion process as claimed in any one of claims 12 to 15, wherein said inner and outer layers comprise materials having differing viscosities.

17. A co-extrusion process as claimed in any one of claims 12 to 16, wherein said inner and outer layers comprise materials having differing melting points.

Fig.1.

(PRIOR ART)

Fig.2.

Fig.3.

Fig.4.

Fig.5.

## Fig.6.

## Fig.7.